# DEMANDE DE BREVET EUROPEEN

(11) **EP 4 811 180 A1**
(43) Date de publication de la demande: **23.09.2026**
(21) Numéro de dépôt: 26165267.1
(22) Date de dépôt: 17.03.2026
(51) Int. Cl.: G06F 21/30, G06F 21/44, H04L 9/32, H04L 9/40, H04W 12/06, H04W 12/08, H04W 12/088, H04W 12/108

(54) **EQUIPEMENT ÉLECTRONIQUE AVIONIQUE AVEC PORT(S) DE RÉCEPTION SOUS AUTHENTIFICATION D ORIGINE, INSTALLATION DE COMMUNICATION AVIONIQUE ASSOCIÉE**

(30) Priorité: 17.03.2025 FR 2502674
(71) Demandeur: THALES, 92190 Meudon (FR); Université de Bordeaux, 33000 Bordeaux (FR); Institut Polytechnique de Bordeaux, 33402 Talence Cedex (FR); Centre National de la Recherche Scientifique, 75016 Paris (FR)
(72) Inventeur: MONNIER, Stéphane, 33701 MERIGNAC (FR); AHMED, Toufik, 33400 TALENCE (FR)
(74) Mandataire: Lavoix

(57) **Abrégé**

L'invention concerne un équipement électronique avionique (50, 50A) configuré pour être embarqué à bord d'un aéronef, l'équipement (50, 50A) comprenant un ensemble de port(s) de communication (54) en émission, dit(s) port(s) émetteur(s), et de port(s) de communication (54) en réception, dit(s) port(s) récepteur(s).

Au moins un port récepteur (54A) est commutable entre un état bloqué dans lequel les données reçues par ledit port sont automatiquement effacées et un état débloqué dans lequel les données reçues par ledit port sont stockées en vue d'un traitement ultérieur.

L'équipement (50, 50A) comprend un module de sécurité (56) configuré pour commuter un port récepteur (54A) respectif de son état bloqué à son état débloqué pour un groupe prédéfini d'équipement(s) émetteur(s) (50, 50B), après réception d'un message d'authentification (RCA) valide émis par le groupe d'équipement(s) émetteur(s) (50, 50B), en réponse à une requête en authentification (DAC) envoyée audit groupe par le module de sécurité (56).

## Description

La présente invention concerne un équipement électronique avionique configuré pour être embarqué à bord d'un aéronef.

L'invention concerne également une installation de communication avionique configurée pour être embarquée à bord d'un aéronef, comprenant une pluralité d'équipements électroniques avioniques connectés entre eux.

L'invention concerne le domaine de la cyber-sécurité, en particulier dans le domaine avionique.

Les différents domaines d'un aéronef, tels que les domaines ACD (de l'anglais *Aircraft Control Domain*)*,* AISD (de l'anglais *Airline Information System Domain*)*,* et PIESD (de l'anglais *Passenger Information and Entertainment Systems Domain*) selon la norme ARINC 811 du 20 décembre 2005, n'ont pas les mêmes niveaux d'impact sur la sécurité de vol en cas de dysfonctionnement. Le domaine ACD est le plus critique et le domaine PIESD a le moins d'impact.

Quand des échanges ont lieu entre les domaines, une passerelle de sécurité est intégrée à l'aéronef pour assurer qu'un domaine ne puisse pas perturber un autre domaine.

Dans un même domaine tous les calculateurs sont arbitrairement déclarés de confiance. Or, au titre de la défense en profondeur recommandée pour augmenter la résilience des systèmes face à une menace cyber, il faut prendre en compte le fait qu'un jour peut-être la défense périmétrique sera contournée, soit en trouvant une faille dans les passerelles en charge de traiter et éliminer les flux suspects, soit en mettant à mal les moyens organisationnels mis en place pour assurer que les calculateurs ne sont ni modifiés, ni remplacés. Dans ce cas, le paradigme selon lequel les calculateurs d'un même domaine sont tous de confiance tombera.

Le but de l'invention est alors de proposer un mécanisme additionnel de sécurité visant à s'assurer de l'authenticité des données reçues.

A cet effet, l'invention a pour objet un équipement électronique avionique configuré pour être embarqué à bord d'un aéronef, l'équipement comprenant un ensemble de port(s) de communication en émission, dit(s) port(s) émetteur(s), et de port(s) de communication en réception, dit(s) port(s) récepteur(s),
au moins un port récepteur étant commutable entre un état bloqué dans lequel les données reçues par ledit port sont automatiquement effacées et un état débloqué dans lequel les données reçues par ledit port sont stockées en vue d'un traitement ultérieur, et
l'équipement comprenant en outre un module de sécurité configuré pour commuter un port récepteur respectif de son état bloqué à son état débloqué pour un groupe prédéfini d'équipement(s) émetteur(s), après réception d'un message d'authentification valide émis par le groupe d'équipement(s) émetteur(s), en réponse à une requête en authentification envoyée audit groupe par le module de sécurité.

Avec l'équipement électronique avionique selon l'invention, pour le ou les ports récepteurs commutables entre l'état bloqué et l'état débloqué, le stockage de données en vue de leur traitement ultérieur, typiquement en vue de leur transmission à une application logicielle exécutée sur l'équipement électronique avionique, est alors effectué seulement si le groupe d'équipement(s) émetteur(s) ayant émis ces données a été préalablement authentifié par l'équipement avionique selon l'invention. Ce ou ces ports commutables entre l'état bloqué et l'état débloqué sont également appelés ports sous authentification d'origine. En effet, à défaut d'une telle authentification, chaque port correspondant reste à l'état bloqué pour le groupe d'équipement(s) émetteur(s) concerné, et le cas échéant, les données reçues dudit groupe sont automatiquement effacées dès leur réception par ledit port récepteur.

Suivant d'autres aspects avantageux de l'invention, l'équipement électronique avionique comprend une ou plusieurs des caractéristiques suivantes, prises isolément ou suivant toutes les combinaisons techniquement possibles :
- à la mise sous tension de l'équipement, le module de sécurité est configuré pour initialiser chaque port récepteur respectif à son état débloqué pendant une durée d'initialisation prédéfinie ; puis pour, à l'expiration de la durée d'initialisation, commuter automatiquement de son état débloqué à son état bloqué chaque port récepteur qui n'a pas reçu un message d'authentification valide ;
- le module de sécurité est configuré pour envoyer régulièrement la requête en authentification au groupe d'équipement(s) émetteur(s) associé au port récepteur respectif ;
le module de sécurité étant de préférence configuré pour envoyer audit groupe selon une période d'émission prédéfinie la requête en authentification ;
- la durée d'initialisation prédéfinie est supérieure à la période d'émission prédéfinie ;
   la durée d'initialisation prédéfinie étant de préférence égale à un multiple de la période d'émission prédéfinie, le multiple étant un nombre entier supérieur ou égal à deux ;
- si une connexion entre l'équipement et le groupe prédéfini d'équipement(s) émetteur(s) est effectuée via un commutateur réseau, alors le module de sécurité est configuré pour commuter un port récepteur respectif de son état bloqué à son état débloqué pour ledit groupe, seulement après réception à la fois d'un premier message d'authentification valide émis par ledit groupe en réponse à une première requête en authentification envoyée audit groupe et d'un deuxième message d'authentification valide émis par le commutateur réseau, en réponse à une deuxième requête en authentification envoyée au commutateur réseau ;
- le module de sécurité est configuré pour envoyer à un unique équipement émetteur du groupe la requête en authentification ;
- si le groupe d'équipement(s) émetteur(s) comporte plusieurs équipements émetteurs, alors le module de sécurité est configuré pour envoyer la requête en authentification à un équipement émetteur formant proxy pour le ou les autres équipements du groupe ;
- la requête en authentification contient un identifiant d'un équipement émetteur auquel ladite requête est destinée, un premier aléa, un identifiant de ladite requête, et un identifiant d'un algorithme de signature à appliquer ; et
- en réponse à une requête en authentification reçue contenant l'identifiant de l'équipement émetteur, le premier aléa, l'identifiant de la requête, et l'identifiant de l'algorithme - le message d'authentification généré par l'équipement émetteur contient un deuxième aléa, une signature et ledit identifiant de la requête ; la signature étant obtenue en appliquant - l'algorithme de signature correspondant à l'identifiant d'algorithme - à une concaténation de l'identifiant de l'équipement émetteur, du premier aléa, de l'identifiant de la requête et du deuxième aléa ; et le module de sécurité est configuré pour vérifier la signature contenue dans un message d'authentification reçu en réponse à une requête en authentification préalablement envoyée et déterminer ensuite le message d'authentification comme valide si la signature est correcte, et respectivement comme invalide si la signature est erronée.

L'invention concerne également une installation de communication avionique configurée pour être embarquée à bord d'un aéronef, l'installation comprenant une pluralité d'équipements électroniques avioniques connectés entre eux, au moins l'un des équipements étant tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

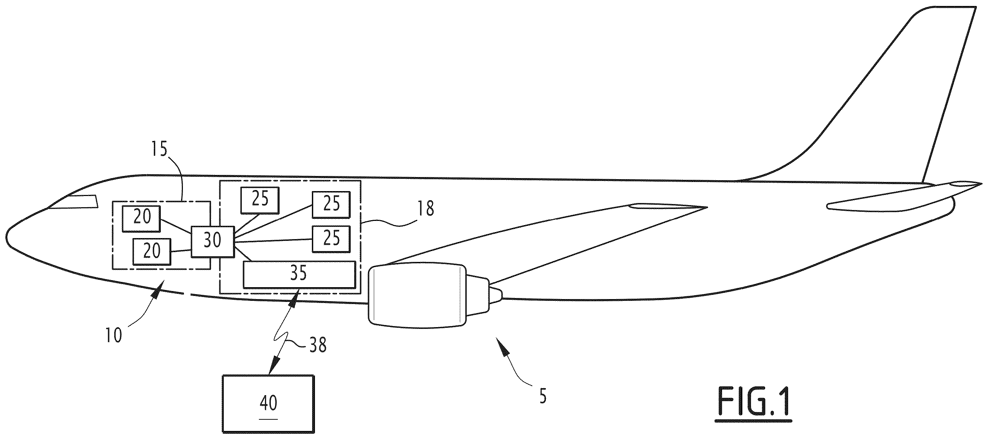

- la figure 1 est une représentation schématique d'un aéronef selon l'invention comprenant une installation de communication compartimentée en un domaine avionique et un domaine ouvert externe au domaine avionique ; l'installation de communication comportant plusieurs systèmes avioniques appartenant au domaine avionique, un ou plusieurs appareils électroniques appartenant au domaine ouvert, et une passerelle électronique de communication connectée entre le ou les appareils électroniques et les systèmes avioniques, au moins l'un parmi les systèmes avioniques et les appareils électroniques formant un équipement électronique avionique selon l'invention ; et

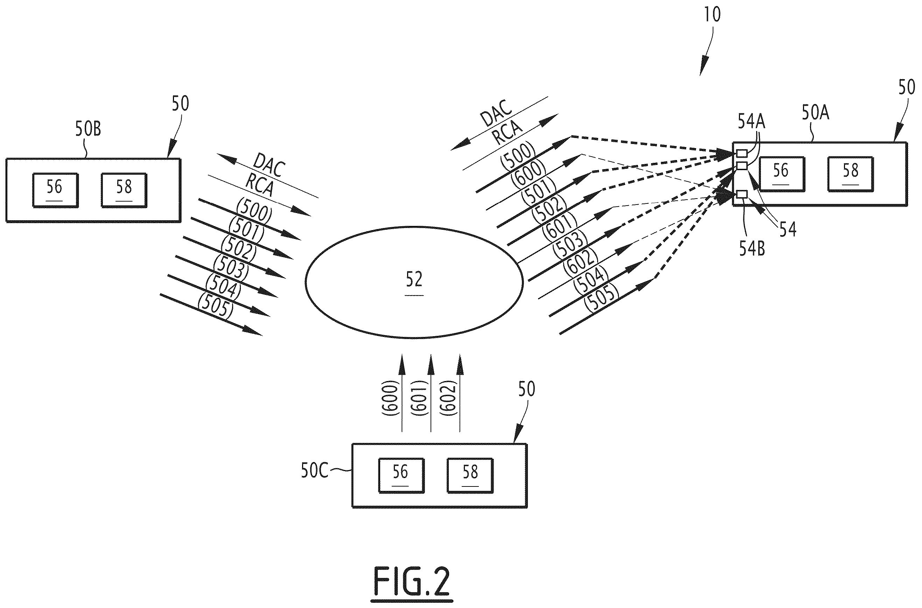

- la figure 2 est une représentation schématique de l'installation de communication selon l'invention, l'installation comprenant une pluralité d'équipements électroniques avioniques connectés entre eux, les équipements étant des systèmes avioniques, ou des appareils électroniques, ou encore un mélange de systèmes avioniques et d'appareils électroniques de la figure 1 ; au moins l'un des équipements étant un équipement selon l'invention avec au moins un port sous authentification d'origine, ledit port étant commutable d'un état bloqué à un état débloqué après réception d'un message d'authentification valide pour un groupe d'équipement(s) émetteur(s), en réponse à une requête en authentification envoyée audit groupe ;

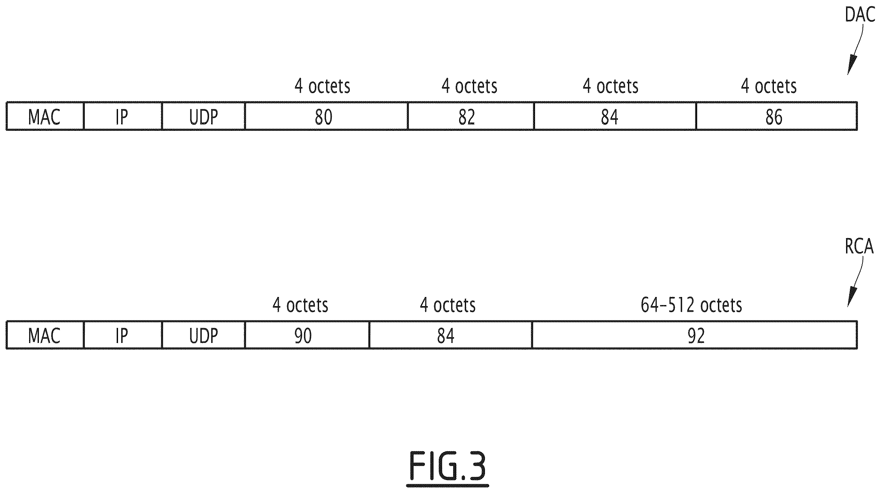

- la figure 3 est une représentation des différents champs formant la requête en authentification, et respectivement le message d'authentification généré en réponse par l'équipement émetteur concerné ; et

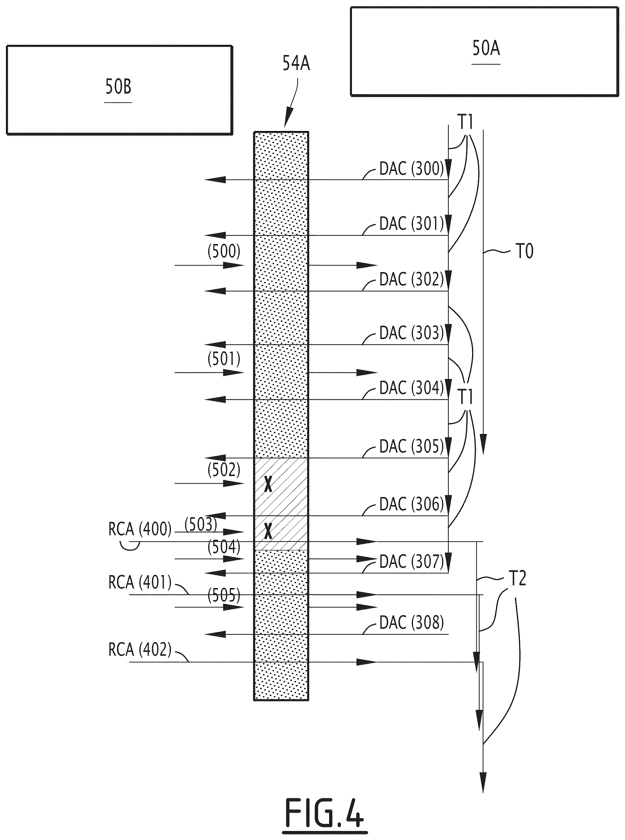

- la figure 4 est une vue illustrant une séquence de messages échangés entre l'équipement selon l'invention et un équipement émetteur.

Les expressions « sensiblement égal(e) à » et « de l'ordre de » définissent une relation d'égalité à plus ou moins 20%, de préférence à plus ou moins 10%, et de préférence encore à plus ou moins 5%.

Sur la figure 1, un aéronef 5 comprend une installation de communication 10 compartimentée en un domaine avionique 15 et un domaine ouvert 18, externe au domaine avionique 15.

L'installation de communication 10 comporte plusieurs systèmes avioniques 20 appartenant au domaine avionique 15 ; ainsi qu'un ou plusieurs appareils électroniques 25, externes au domaine avionique 15 et appartenant au domaine ouvert 18.

Dans l'exemple de la figure 1, l'installation de communication 10 comporte une passerelle électronique de communication 30 connectée entre le ou les appareils électroniques 25 et les systèmes avioniques 20. Dans l'exemple de la figure 1, l'installation de communication 10 comporte plusieurs appareils électroniques 25, chacun appartenant au domaine ouvert 18.

En complément, l'installation de communication 10 comprend en outre un serveur de communication 35 communiquant via une liaison de communication 38 avec au moins une station électronique 40, externe à l'aéronef 5.

Le domaine avionique 15 est un domaine correspondant à un niveau de sécurité le plus élevé à bord de l'aéronef 5, en particulier le niveau de sécurité requis le plus élevé de l'installation de communication 10 de l'aéronef 5.

Le domaine avionique 15 est alors un domaine pour limiter un risque de perturbation - par au moins une communication avec un appareil ou dispositif électronique externe au domaine avionique 15 - de fonction(s) mise(s) en œuvre par l'au moins un système avionique 20 du domaine avionique 15. Le domaine avionique 15 inclut le ou les systèmes avioniques 20.

Le domaine avionique 15 est typiquement le domaine ACD (de l'anglais *Aircraft Control Domain*) selon la norme ARINC 811 du 20 décembre 2005.

Le domaine ouvert 18 est un domaine auquel correspond un niveau de sécurité moins élevé que le niveau de sécurité du domaine avionique 15. Le domaine ouvert 18 inclut le ou les appareils électroniques 25.

Chaque système avionique 20 est embarqué à bord de l'aéronef 5 et appartient au domaine avionique 15. Chaque système avionique 20 est connu en soi, également appelé calculateur avionique, et est configuré pour mettre en œuvre une ou plusieurs fonctions avioniques respectives.

Chaque système avionique 20 est par exemple choisi parmi le groupe consistant en : un système de gestion du vol, également appelé FMS (de l'anglais *Flight Management System*) ; un système de guidage, ou FG (de l'anglais *Flight Guidance*) ; un système de commandes de vol, ou FCS (de l'anglais *Flight Control System*) ; un système de positionnement par satellite GNSS (de l'anglais *Global Navigation Satellite System*)*,* tel qu'un système GPS (de l'anglais *Global Positioning System*) ; un système de référence inertielle, également appelé système IRS (de l'anglais *Inertial Reference System*) ; un système d'aide à l'atterrissage ILS (de l'anglais *Instrument Landing System*) ou un système d'aide à l'atterrissage MLS (de l'anglais *Microwave Landing System*) ; un système de prévention de sortie de piste actif, également appelé système ROPS (de l'anglais *Runway Overrun Prevention System*) ; et un radioaltimètre, également noté RA (de l'anglais *RadioAltimeter*)*.*

La passerelle électronique de communication 30 est en interface entre le domaine ouvert 18 et le domaine avionique 15. Un message de données transmis entre le domaine ouvert 18 et le domaine avionique 15, c'est-à-dire depuis le domaine ouvert 18 vers le domaine avionique 15, ou inversement depuis le domaine avionique 15 vers le domaine ouvert 18, transite alors nécessairement par la passerelle de communication 30.

Le serveur de communication 35 est configuré pour communiquer via la liaison de communication 38 avec l'au moins une station électronique externe 40, ladite au moins une station externe 40 étant par exemple une station au sol, ou encore une station informatique en nuage (de l'anglais *cloud computing*)*.* Le serveur de communication 35 est préférentiellement connecté à la passerelle de communication 30. Le serveur de communication 35 appartient typiquement au domaine ouvert 18.

Le serveur de communication 35 est connu en soi, et comporte notamment un émetteur-récepteur, non représenté, compatible avec la liaison de communication 38. La liaison de communication 38 est typiquement une liaison radioélectrique, c'est-à-dire une liaison par ondes radioélectriques, tel qu'une liaison par satellite. L'émetteur-récepteur est alors un émetteur-récepteur radioélectrique.

La station externe 40 est typiquement connectée à une infrastructure informatique d'un centre de commande opérationnel, également appelé OCC (de l'anglais *Operational Control Center*)*.* La station externe 40 est alors avantageusement configurée pour transmettre des données à l'installation de communication 10, comme par exemple un plan de vol de l'aéronef 5 et des informations relatives à l'aéronef 5, telles que sa masse, sa configuration, son équilibrage, ou encore son identifiant.

Sur la figure 2, l'installation de communication 10, représentée de manière simplifiée, comprend plusieurs équipements électroniques avioniques 50 connectés entre eux, appelés équipements avioniques 50 par la suite. Dans l'exemple de la figure 2, les équipements avioniques 50 sont connectés entre eux via un commutateur réseau 52 (de l'anglais *switch*)*.* En variante, non représentée, les équipements avioniques 50 sont connectés entre eux via des liaisons point à point.

Les équipements avioniques 50 sont des systèmes avioniques 20 appartenant au domaine avionique 15, ou des appareils électroniques 25 appartenant au domaine ouvert 18, ou encore un ensemble d'équipements avioniques 50 est un mélange de systèmes avioniques 20 et d'appareils électroniques 25.

Chaque équipement avionique 50 selon l'invention comprend un ensemble de port(s) de communication en émission, dit(s) port(s) émetteur(s), et de port(s) de communication en réception, dit(s) port(s) récepteur(s). Dans l'exemple de la figure 2, l'un des équipements avioniques, aussi appelé premier équipement avionique 50A, comprend plusieurs ports de communication bidirectionnelle 54, chaque port de communication bidirectionnelle 54 étant alors apte à émettre des données et à recevoir des données.

Selon l'invention, au moins un port récepteur de l'équipement avionique 50A est commutable entre un état bloqué dans lequel les données reçues par ledit port sont automatiquement effacées et un état débloqué dans lequel les données reçues par ledit port sont stockées en vue d'un traitement ultérieur.

L'équipement avionique 50A selon l'invention comprend en outre un module de sécurité 56 configuré pour commuter un port récepteur respectif de son état bloqué à son état débloqué pour un groupe prédéfini d'équipement(s) émetteur(s), après réception d'un message d'authentification RCA valide émis par le groupe d'équipement(s) émetteur(s), en réponse à une requête en authentification DAC envoyée audit groupe par le module de sécurité 56. Le message d'authentification RCA et la requête en notification DAC sont visibles à la figure 3, et seront décrits plus en détail par la suite.

Chaque port récepteur qui est commutable de son état bloqué à son état débloqué après réception d'un message d'authentification RCA valide respectif est également appelé port sous authentification d'origine, aussi noté port SAO. Dans l'exemple de la figure 2, le premier équipement avionique 50A comprend un ensemble de port(s) SAO et un ensemble de port(s) normal(ux), i.e. non-commutable(s) entre l'état bloqué et l'état débloqué ; et chaque port SAO est noté 54A, chaque port normal étant noté 54B.

Avantageusement, l'équipement avionique 50A selon l'invention comprend en outre un module de traitement 58 configuré pour traiter les données reçues par le ou les ports récepteurs. Le module de traitement 58 est alors configuré pour traiter les données reçues par le ou les ports SAO qui sont dans leur état débloqué, ainsi que pour traiter toutes les données reçues par le ou les ports normaux. Le module de traitement 58 comporte typiquement une ou plusieurs applications logicielles, exécutées pour effectuer le ou lesdits traitements.

Dans l'exemple de la figure 2, chaque équipement avionique 50 comprend un ensemble de port(s) SAO, le module de sécurité 56, et avantageusement le module de traitement 58. Chaque équipement avionique 50 de l'installation de communication 10 est alors préférentiellement configuré pour mettre en œuvre l'invention. Dans l'exemple de la figure 2, par souci de simplification du dessin, les ports de communication ne sont pas représentés pour les équipements avioniques 50 autres que le premier équipement avionique 50A, c'est-à-dire pour un deuxième équipement avionique 50B et un troisième équipement avionique 50C.

Au moins un équipement avionique 50, et de préférence chaque équipement avionique 50, comprend par exemple une unité de traitement d'informations formée typiquement d'une mémoire et d'un processeur associé à la mémoire, non représentés.

Selon cet exemple, le module d'acquisition 56 et le module de traitement 58 sont réalisés chacun sous forme d'un logiciel, ou d'une brique logicielle, exécutable par le processeur. La mémoire de l'équipement avionique 50 respectif est alors apte à stocker un logiciel de sécurité et un logiciel de traitement. Le processeur de l'équipement avionique 50 respectif est alors apte à exécuter chacun des logiciels parmi le logiciel de sécurité et le logiciel de traitement.

En variante non représentée, le module d'acquisition 56 et le module de traitement 58 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque l'au moins un équipement avionique 50, et de préférence chaque équipement avionique 50, est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

Sur la figure 2, les nombres indiqués entre parenthèses, à savoir (500) à (505) et (600) à (602), correspondent à des numéros de message. Les messages (500) à (505) sont des messages émis par le deuxième équipement avionique 50B, agissant en tant qu'équipement émetteur devant s'authentifier auprès du premier équipement avionique 50A, en particulier de son module de sécurité 56, les messages (500) à (505) du deuxième équipement avionique 50B étant reçus par un port SAO 54A du premier équipement avionique 50A. Les messages (600) à (602) sont des messages émis par le troisième équipement avionique 50C, agissant en tant qu'un autre équipement émetteur ne devant pas s'authentifier auprès du premier équipement avionique 50A, les messages (600) à (602) du troisième équipement avionique 50C étant reçus par un port normal 54B du premier équipement avionique 50A.

Le module de sécurité 56 est configuré pour commuter un port récepteur respectif de son état bloqué à son état débloqué pour un groupe prédéfini d'équipement(s) émetteur(s), seulement après réception d'un message d'authentification RCA valide émis par le groupe d'équipement(s) émetteur(s).

Le module de sécurité 56 est par exemple configuré pour envoyer à un unique équipement émetteur 50, 50B du groupe la requête en authentification DAC.

En complément facultatif, si le groupe d'équipements émetteurs 50, 50B comporte plusieurs équipements émetteurs, alors le module de sécurité 56 est configuré pour envoyer la requête en authentification DAC à un équipement émetteur formant proxy pour le ou les autres équipements du groupe.

Selon un premier aspect avantageux, le module de sécurité 56 est configuré pour, à la mise sous tension de l'équipement avionique 50 respectif mettant en œuvre l'invention, tel que le premier équipement avionique 50A sur la figure 2, initialiser chaque port récepteur respectif à son état débloqué pendant une durée d'initialisation T0 prédéfinie. A l'expiration de la durée d'initialisation, le module de sécurité 56 est alors configuré en outre pour commuter automatiquement de son état débloqué à son état bloqué chaque port récepteur qui n'aura pas reçu un message d'authentification RCA valide pendant ladite durée d'initialisation.

La durée d'initialisation T0 prédéfinie est par exemple comprise entre 30 secondes et deux minutes, de préférence comprise entre 45 secondes et 90 secondes, et de préférence encore sensiblement égale à 60 secondes.

Selon un deuxième aspect avantageux, le module de sécurité 56 est configuré pour envoyer régulièrement la requête en authentification DAC au groupe d'équipements émetteurs 50, 50B associé au port récepteur 54A respectif.

Selon ce deuxième aspect avantageux, le module de sécurité 56 est par exemple configuré pour envoyer audit groupe selon une période d'émission T1 prédéfinie la requête en authentification DAC.

Selon ce deuxième aspect avantageux, la durée d'initialisation T0 est typiquement supérieure à la période d'émission T1. La durée d'initialisation T0 est par exemple égale à un multiple de la période d'émission T1, le multiple étant un nombre entier supérieur ou égal à deux.

La période d'émission T1 est par exemple comprise entre 5 secondes et 15 secondes, et de préférence sensiblement égale à 10 secondes.

Selon un troisième aspect avantageux, si une connexion entre l'équipement 50, 50A et le groupe prédéfini d'équipements émetteurs 50, 50B est effectuée via le commutateur réseau 52, alors le module de sécurité 56 est configuré pour commuter un port SAO 54A respectif de son état bloqué à son état débloqué pour ledit groupe, seulement après réception à la fois d'un premier message d'authentification RCA valide émis par ledit groupe en réponse à une première requête en authentification DAC envoyée audit groupe et d'un deuxième message d'authentification RCA valide émis par le commutateur réseau 52, en réponse à une deuxième requête en authentification DAC envoyée au commutateur réseau 52.

Sur la figure 3, la requête en authentification DAC contient un identifiant 80 d'un équipement émetteur 50, 50B auquel ladite requête DAC est destinée, aussi appelé premier identifiant 80 ; un premier aléa 82 ; un identifiant 84 de ladite requête DAC, aussi appelé deuxième identifiant 84 ; et un identifiant 86 d'un algorithme de signature à appliquer, aussi appelé troisième identifiant 86.

Dans l'exemple de la figure 3, la requête en authentification DAC contient également un en-tête comportant des champs MAC (de l'anglais *Media Access Control*)*,* IP (de l'anglais *Internet Protocol*) et UDP (de l'anglais *User Datagram Protocol*)*.* Comme connu en soi, le champ MAC contient typiquement une adresse MAC, c'est-à-dire une adresse physique unique attribuée à une interface réseau, généralement utilisé dans la couche liaison de données (couche 2 du modèle OSI) pour l'identification des équipements sur un réseau local. Le champ IP contient typiquement une adresse logique permettant d'identifier un équipement sur un réseau interconnecté, généralement utilisé dans la couche réseau (couche 3 du modèle OSI) pour acheminer des paquets entre différents réseaux. Le champ UDP contient typiquement une indication d'un protocole de transport permettant d'envoyer des données sous forme de datagramme sans connexion préalable, généralement utilisé dans la couche transport (couche 4 du modèle OSI).

En réponse à une requête en authentification DAC reçue contenant l'identifiant 80 de l'équipement émetteur 50, 50B, le premier aléa 82, l'identifiant 84 de la requête DAC, et l'identifiant 86 de l'algorithme - le message d'authentification RCA généré par l'équipement émetteur 50, 50B contient un deuxième aléa 90, une signature 92 et ledit identifiant 84 de la requête, comme représenté également sur la figure 3.

Dans l'exemple de la figure 3, le message d'authentification RCA contient également l'en-tête comportant les champs MAC, IP et UDP.

Dans l'exemple de la figure 3, des tailles en octets de chacun des champs de la partie utile de la requête en authentification DAC, et respectivement du message d'authentification RCA, sont indiquées à titre d'exemple. Selon cet exemple, la taille pour chacun du premier identifiant 80, du premier aléa 82, du deuxième identifiant 84 et du troisième identifiant 86 est de quatre octets. La taille du deuxième aléa 90 est également par exemple de quatre octets, et la taille de la signature 92 est typiquement comprise entre 64 et 512 octets.

La signature 92 est obtenue en appliquant - l'algorithme de signature correspondant au troisième identifiant 86 - à une concaténation de l'identifiant 80 de l'équipement émetteur 50, 50B, du premier aléa 82, de l'identifiant 84 de la requête DAC et du deuxième aléa 90. Autrement dit, la signature 92 est obtenue en appliquant l'algorithme de signature qui est défini par le troisième identifiant 86 à la concaténation du premier identifiant 80, du premier aléa 82, du deuxième identifiant 84 et du deuxième aléa 90.

Le module de sécurité 56 est alors configuré pour vérifier la signature 92 contenue dans un message d'authentification RCA reçu en réponse à une requête en authentification DAC préalablement envoyée et déterminer ensuite le message d'authentification RCA comme valide si la signature 92 est correcte, et respectivement comme invalide si la signature 92 est erronée.

L'algorithme de signature est par exemple choisi parmi le groupe comprenant : un algorithme HMAC (de l'anglais *Hash-based Message Authentication Code*)*,* également appelé SHA-256 (de l'anglais *Secure Hash Algorithm 256 bits*) ; un algorithme RSA (pour *Rivest, Shamir et Adleman*) avec clé de 2048 bits ; un algorithme RSA avec clé de 4096 bits ; un algorithme ECDSA (de l'anglais *Elliptic Curve Digital Signature Algorithm*) ; et un algorithme EdDSA (de l'anglais *Edwards-Curve Digital Signature Algorithm*)*.*

Selon cet exemple, la valeur contenue dans le troisième identifiant 86 servant à identifier l'algorithme de signature à utiliser est par exemple égale à 0 pour l'algorithme HMAC ; 1 pour l'algorithme RSA-2048 ; 2 pour l'algorithme RSA-4096 ; 3 pour l'algorithme ECDSA ; et 4 pour l'algorithme EdDSA.

Ainsi, l'équipement avionique 50 selon l'invention, tel que le premier équipement avionique 50A dans l'exemple des figures 2 et 4, est configuré pour ne faire remonter les données au module de traitement 58 qu'après avoir reçu la preuve que l'équipement émetteur est en possession d'un secret permettant de l'authentifier.

La propriété qu'un port de réception soit SAO ou non est typiquement une information statique aussi liée au mode de fonctionnement de l'équipement. Par exemple, en mode dit de téléchargement (de l'anglais *dataloading*), il faut pouvoir permettre la mise à jour des équipements avioniques 50 ce qui peut imposer la perte momentanée de la propriété SAO d'un port pour ne pas se trouver dans une situation de blocage.

Les ports de réception SAO 54A sont par exemple regroupés par grappe associée à la partition d'un équipement émetteur des données reçues. La partition émettrice est par exemple un logiciel s'exécutant sur une plateforme IMA (de l'anglais *Integrated Modular Avionics*), c'est-à-dire une plate-forme avionique modulaire intégrée, ou un logiciel principal d'un équipement. Une plateforme IMA héberge par exemple plusieurs partitions avec différents niveaux de criticité DAL (de l'anglais *Development Assurance Level*)*.*

Comme décrit précédemment, les ports de réception SAO 54A ont deux états possibles, à savoir l'état débloqué correspondant à un état dans lequel le port de réception SAO 54A respectif fonctionne normalement, et l'état bloqué correspondant à l'état dans lequel le port de réception SAO 54A respectif ne stocke plus les données reçues qui sont définitivement perdues après leur réception.

Le passage de l'état bloqué à l'état débloqué d'un port SAO 54A respectif ou des ports SAO 54A de la grappe fait suite à un envoi de la requête en authentification DAC (pour Demande d'Authentification par Challenge), telles que les requêtes successives (300) à (308) à la figure 4, émis par l'équipement avionique 50 selon l'invention, tel que le premier équipement avionique 50A, à destination d'un équipement avionique émetteur respectif, tel que le deuxième équipement avionique 50B ; puis à la réception du message d'authentification RCA (pour Réponse au Challenge d'Authentification), tels que les messages d'authentification (400) à (402) successifs à la figure 4 correspondant 400) émis par l'équipement émetteur à destination de l'équipement avionique selon l'invention, le passage à l'état débloqué étant alors effectué après vérification de la validité du message d'authentification RCA reçu par rapport à la requête en authentification DAC envoyée.

La personne du métier observera que les ports de réception associés aux échanges DAC/RCA n'ont initialement pas de propriété de port SAO, et sont alors initialement débloqués pour que ce mécanisme d'échange DAC/RCA soit possible.

Au passage dans un mode opérationnel, après le démarrage de l'équipement avionique 50 selon l'invention, le ou les ports SAO 54A sont alors dans l'état débloqué pendant la durée d'initialisation T0 prédéfinie.

En parallèle, l'équipement avionique 50 selon l'invention, tel que le premier équipement avionique 50A, envoie périodiquement avec la période d'émission T1 une requête en authentification DAC à l'équipement avionique émetteur respectif, tel que le deuxième équipement avionique 50B, notamment à sa partition à l'origine des données reçues, par le port SAO 54A ou la grappe de ports SAO 54A.

A l'expiration de la durée d'initialisation T0, si l'équipement avionique 50 selon l'invention n'a reçu aucun message d'authentification RCA valide, correspondant à la dernière requête en authentification DAC émise, le port SAO 54A respectif ou les ports SAO 54A de la grappe passent à l'état bloqué.

Avantageusement, à chaque réception d'un message d'authentification RCA valide, correspondant à la dernière requête en authentification DAC envoyée par l'équipement avionique 50 selon l'invention, une temporisation T2 prédéfinie est réarmée. A l'expiration de la temporisation T2, le port SAO 54A respectif ou les ports SAO 54A de la grappe passeront à l'état bloqué.

La temporisation T2 est supérieure à la période d'émission T1. La temporisation T2 est par exemple égale à un multiple de la période d'émission T1, le multiple étant un nombre entier supérieur ou égal à deux, de préférence deux.

La temporisation T2 est par exemple comprise entre 10 secondes et 30 secondes, et de préférence sensiblement égale à 20 secondes.

Sur la figure 4, après le passage en mode opérationnel de l'équipement avionique 50 selon l'invention, tel que le premier équipement avionique 50A, des requêtes en authentification DAC, notées successives (300) à (308), sont envoyées successivement toutes les périodes d'émission T1 à l'équipement émetteur respectif, tel que le deuxième équipement avionique 50B. Les ports SAO de l'équipement avionique 50 selon l'invention sont alors à l'état débloqué. Les messages (500) et (501) peuvent être reçus dans les ports SAO 54A de l'équipement avionique 50 selon l'invention.

Au bout de la durée d'initialisation T0, aucun des requêtes en authentification DAC DAC (300) à (305) n'ayant reçu de réponse, le ou les ports SAO 54A associés passent à l'état bloqué, comme représenté par la zone hachurée à la figure 4. Dès lors, plus aucun message reçu dans le ou les ports SAO 54A associés n'est stocké, ceux-ci étant supprimés après réception. Dans l'exemple de la figure 4, le message (502) est par exemple éliminé, sans être traité ultérieurement par le module de traitement 58.

Ensuite, dans l'exemple de la figure 4, l'équipement avionique 50 selon l'invention envoie une nouvelle requête en notification DAC (306). Le message (503) arrive après l'émission de ladite requête en notification DAC (306), mais avant la réception du message d'authentification RCA (400) correspondant, et est donc éliminé, car le ou les ports SAO 54A associés sont toujours à l'état bloqué.

Puis, l'équipement avionique 50 selon l'invention reçoit le message d'authentification RCA (400) valide correspondant à la requête en notification DAC (306), et le port SAO 54A respectif ou les ports SAO 54A de la grappe passent alors à l'état débloqué, les messages suivants (504) et (505) sont alors reçus par le ou les ports SAO 54A associés, puis stockés en vue de leur traitement intérieur par le module de traitement 58.

L'invention permet de faire coexister sur un même aéronef 5 des équipements avioniques 50 des ports SAO 54A à d'autres équipements avioniques 50 n'en ayant pas la capacité.

L'invention peut avantageusement être rajoutée à une solution existante, en rajoutant ce mécanisme selon l'invention en parallèle d'une solution de communication entre équipements avioniques 50 déjà en place.

Dans une installation de communication 10 où certains équipements avioniques 50 peuvent mettre plusieurs dizaines de secondes à démarrer et d'autre quelques secondes, l'invention permet en outre de privilégier la remontée des informations avant tout sans demander une authentification des équipements émetteurs qui sera différée.

Dans le cas d'un équipement qui n'est pas de confiance bombardant un équipement légitime de données malveillantes, la propriété de l'état bloqué d'un port SAO 54 respectif permet au module de traitement 58 de ne pas perdre de temps à lire un port avec des données suspectes, car issues d'un équipement n'ayant pas répondu aux requêtes en authentification DAC.

Par ailleurs, l'invention ne perturbe pas le temps réel existant en ne rajoutant pas de temps de traitement avant l'émission ou après la réception de chaque message, les traitements selon l'invention étant effectués en parallèle.

De plus, l'invention ne perturbe pas les opérations de maintenance, la propriété SAO de chaque port 54A respectif étant désactivable, par exemple pour certains modes de l'aéronef 5, tel qu'un mode stationnement (de l'anglais *ground*) ou un mode téléchargement de données (de l'anglais *dataloading*).

En outre, l'invention est déployable par étape, avec un impact limité sur les équipements avioniques 50. Par exemple, dans un premier temps, seuls quelques équipements émetteurs pourront répondre aux requêtes en authentification DAC émises par l'équipement selon l'invention. Le fait qu'un équipement tiers, tel que le troisième équipement 50C sur la figure 2, ne réponde pas aux requêtes en authentification DAC est alors traité par exemple en affectant une valeur suffisamment grande pour ne pas être atteinte à la durée d'initialisation T0 pour le ou les ports SAO 54A associés aux données reçues dudit équipement tiers. Plus tard, quand l'équipement tiers sera en capacité de répondre aux requêtes en authentification DAC, il suffira alors de repositionner à une valeur nominale, telle que 60 secondes, la durée d'initialisation T0 pour le ou les ports SAO 54A associés aux données reçues dudit équipement tiers.

L'invention concerne tout type de communication avionique, notamment les communications de type Ethernet, ARINC 664 partie 3, ARINC 664 partie 7 et TSN.

On conçoit ainsi que l'équipement avionique 50 selon l'invention permet de proposer un mécanisme additionnel de sécurité visant à s'assurer de l'authenticité des données reçues.

## Revendications

1. Equipement électronique avionique (50, 50A) configuré pour être embarqué à bord d'un aéronef (5), l'équipement (50, 50A) comprenant un ensemble de port(s) de communication (54) en émission, dit(s) port(s) émetteur(s), et de port(s) de communication (54) en réception, dit(s) port(s) récepteur(s),
**caractérisé en ce qu'**au moins un port récepteur (54A) est commutable entre un état bloqué dans lequel les données reçues par ledit port sont automatiquement effacées et un état débloqué dans lequel les données reçues par ledit port sont stockées en vue d'un traitement ultérieur, et
**en ce que** l'équipement (50, 50A) comprend en outre un module de sécurité (56) configuré pour commuter un port récepteur (54A) respectif de son état bloqué à son état débloqué pour un groupe prédéfini d'équipement(s) émetteur(s) (50, 50B), après réception d'un message d'authentification (RCA) valide émis par le groupe d'équipement(s) émetteur(s) (50, 50B), en réponse à une requête en authentification (DAC) envoyée audit groupe par le module de sécurité (56).

2. Equipement (50, 50A) selon la revendication 1, dans lequel à la mise sous tension de l'équipement (50, 50A), le module de sécurité (56) est configuré pour initialiser chaque port récepteur (54A) respectif à son état débloqué pendant une durée d'initialisation (T0) prédéfinie ; puis pour, à l'expiration de la durée d'initialisation, commuter automatiquement de son état débloqué à son état bloqué chaque port récepteur (54A) qui n'a pas reçu un message d'authentification (RCA) valide.

3. Equipement (50, 50A) selon la revendication 1 ou 2, dans lequel le module de sécurité (56) est configuré pour envoyer régulièrement la requête en authentification (DAC) au groupe d'équipement(s) émetteur(s) (50, 50B) associé au port récepteur (54A) respectif ;
le module de sécurité (56) étant de préférence configuré pour envoyer audit groupe selon une période d'émission (T1) prédéfinie la requête en authentification (DAC).

4. Equipement (50, 50A) selon les revendications 2 et 3, dans lequel la durée d'initialisation (T0) prédéfinie est supérieure à la période d'émission (T1) prédéfinie ;
la durée d'initialisation (T0) prédéfinie étant de préférence égale à un multiple de la période d'émission (T1) prédéfinie, le multiple étant un nombre entier supérieur ou égal à deux.

5. Equipement (50, 50A) selon l'une quelconque des revendications précédentes, dans lequel si une connexion entre l'équipement (50, 50A) et le groupe prédéfini d'équipement(s) émetteur(s) (50, 50B) est effectuée via un commutateur réseau (52), alors le module de sécurité (56) est configuré pour commuter un port récepteur (54A) respectif de son état bloqué à son état débloqué pour ledit groupe, seulement après réception à la fois d'un premier message d'authentification (RCA) valide émis par ledit groupe en réponse à une première requête en authentification (DAC) envoyée audit groupe et d'un deuxième message d'authentification (RCA) valide émis par le commutateur réseau (52), en réponse à une deuxième requête en authentification (DAC) envoyée au commutateur réseau (52).

6. Equipement (50, 50A) selon l'une quelconque des revendications précédentes, dans lequel le module de sécurité (56) est configuré pour envoyer à un unique équipement émetteur (50, 50B) du groupe la requête en authentification (DAC).

7. Equipement (50, 50A) selon l'une quelconque des revendications précédentes, dans lequel si le groupe d'équipement(s) émetteur(s) (50, 50B) comporte plusieurs équipements émetteurs, alors le module de sécurité (56) est configuré pour envoyer la requête en authentification (DAC) à un équipement émetteur formant proxy pour le ou les autres équipements du groupe.

8. Equipement (50, 50A) selon l'une quelconque des revendications précédentes, dans lequel la requête en authentification (DAC) contient un identifiant (80) d'un équipement émetteur (50, 50B) auquel ladite requête (DAC) est destinée, un premier aléa (82), un identifiant (84) de ladite requête (DAC), et un identifiant (86) d'un algorithme de signature à appliquer.

9. Equipement (50, 50A) selon la revendication 8, dans lequel - en réponse à une requête en authentification (DAC) reçue contenant l'identifiant (80) de l'équipement émetteur (50, 50B), le premier aléa (82), l'identifiant (84) de la requête (DAC), et l'identifiant (86) de l'algorithme - le message d'authentification (RCA) généré par l'équipement émetteur (50, 50B) contient un deuxième aléa (90), une signature (92) et ledit identifiant (84) de la requête ; la signature (92) étant obtenue en appliquant - l'algorithme de signature correspondant à l'identifiant d'algorithme (86) - à une concaténation de l'identifiant (80) de l'équipement émetteur (50, 50B), du premier aléa (82), de l'identifiant (84) de la requête (DAC) et du deuxième aléa (90) ; et le module de sécurité (56) est configuré pour vérifier la signature (92) contenue dans un message d'authentification (RCA) reçu en réponse à une requête en authentification (DAC) préalablement envoyée et déterminer ensuite le message d'authentification (RCA) comme valide si la signature (92) est correcte, et respectivement comme invalide si la signature (92) est erronée.

10. Installation de communication avionique (10) configurée pour être embarquée à bord d'un aéronef (5), l'installation (10) comprenant une pluralité d'équipements électroniques avioniques (50) connectés entre eux, **caractérisée en ce qu'**au moins l'un des équipements (50) est selon l'une quelconque des revendications précédentes.
